# DEMANDE DE BREVET EUROPEEN

(11) **EP 1 020 835 A1**
(43) Date de publication de la demande: **19.07.2000**
(21) Numéro de dépôt: 00400026.1
(22) Date de dépôt: 07.01.2000
(51) Int. Cl.: G09B 9/05

(54) **Simulateur de conduite**

(30) Priorité: 11.01.1999 FR 9900197
(71) Demandeur: Renault, 92109 Boulogne Billancourt (FR)
(72) Inventeur: Deumier, Stéphane, 27700 Les Andelys (FR); Kraemer, Jean-Christophe, 78590 Noisy le Roi (FR); Meillier, Jean-Louis, Pinar Antequera, 47153 Valladolid (ES)

(57) **Abrégé**

Procédé pour simuler la conduite d'un véhicule, dans lequel on génère des sons simulant le bruit du moteur du véhicule, on génère des sons simulant le bruit aérodynamique du véhicule du à l'écoulement de l'air le long de la carrosserie, et on génère des sons simulant le bruit de roulement du véhicule du au contact entre les pneumatiques et la chaussée, pour recréer l'environnement sonore du véhicule à l'intérieur et autour de celui-ci.

## Description

La présente invention concerne une demande de la simulation sonore d'un véhicule.

Pour procéder à l'évaluation de nouveaux composants ou de nouvelles prestations offertes au conducteur, il est souvent nécessaire de recourir à une implantation sur véhicule. Pour réduire les temps de développement et de mise au point, il est important d'utiliser des outils de simulation représentatifs d'un véhicule entier. Le simulateur de conduite est un de ces outils-puisqu'il permet d'effectuer en laboratoire des tests qui nécessiteraient une mise en oeuvre lourde si ceux-ci devaient être réalisés sur route ou sur piste. Grâce au simulateur, il devient aussi beaucoup plus simple de valider des prestations confidentielles délicates à tester sur routes ouvertes.

Cependant, pour être réaliste, le simulateur doit reproduire aussi fidèlement que possible non seulement l'environnement visuel, mais aussi l'environnement sonore, objet de ce brevet. Créer une ambiance sonore et visuelle de qualité permettra la réalisation de tests dans les meilleures conditions, c'est-à-dire faire en sorte que les personnes appelées à réaliser des tests puissent faire abstraction du simulateur de conduite pour se concentrer sur l'objet du test.

Le document US 5368484 décrit un simulateur de conduite destiné à reproduire l'ambiance vibratoire et acoustique d'un véhicule. Le simulateur prend en compte le volant, le pédalier, le siège et le levier de vitesse. Pour reproduire le ressenti vibratoire, deux sources de bruit sont utilisées dans des conditions particulières, c'est-à-dire dans de très petits volumes de charge acoustique. Ainsi, la compression de l'air provoquée par les ondes acoustiques provoque une mise en vibration des parois avoisinantes qui est l'effet recherché.

Les solutions antérieures mettent en oeuvre des transducteurs acoustiques pour recréer l'environnement sonore autour, et dans le véhicule du ou des bruits émis par le moteur.

La présente invention a pour objet de proposer une simulation améliorée de la conduite d'un véhicule.

Le procédé, selon l'invention, est prévu pour simuler la conduite d'un véhicule, dans lequel on génère des sons simulant le bruit du moteur du véhicule, des sons simulant le bruit aérodynamique du véhicule du à Técoulement de l'air le long de la carrosserie, et des sons simulant le bruit de roulement du véhicule du au contact entre les pneumatiques et la chaussée, pour recréer l'environnement sonore du véhicule à l'intérieur et autour de celui-ci.

Avantageusement, on génère des sons de fréquence comprise entre 10 et 3000 Hz dans le compartiment moteur pour les transmettre à la structure du véhicule, et des sons de fréquence comprise entre 50 et 12000 Hz dans le compartiment moteur pour les rayonner en direction de l'habitacle du véhicule.

Avantageusement, on génère des sons de fréquence comprise entre 80 et 4000 Hz à proximité du pare-brise du véhicule au moins en trois positions latérale gauche, latérale droite et centrale.

Avantageusement, on génère des sons de fréquence comprise entre 60 et 15000 Hz à proximité de chaque roue du véhicule en direction de l'habitacle, et des sons de fréquence comprise entre 50 et 10000 Hz sous le véhicule pour les transmettre dans l'habitacle par l'intermédiaire du plancher du véhicule.

La présente invention a également pour objet un dispositif de simulation de la conduite d'un véhicule, caractérisé par le fait qu'il comprend un moyen pour générer des sons simulant le bruit du moteur aérodynamique du véhicule du à l'écoulement de l'air le long de la carrosserie, et un moyen pour générer des sons simulant le bruit de roulement du véhicule du au contact entre les pneumatiques et la chaussée, pour recréer l'environnement sonore du véhicule à l'intérieur et autour de celui-ci.

Dans un mode de réalisation de l'invention, le moyen pour générer des sons simulant le bruit du moteur du véhicule comprend un excitateur électrodynamique de fréquence comprise entre 10 et 3000 Hz disposé dans le compartiment moteur et lié à la structure du véhicule, et des transducteurs électrodynamiques de fréquence comprise entre 50 et 12000 Hz disposés dans le compartiment moteur et dirigés vers l'habitacle du véhicule.

Dans un mode de réalisation de l'invention, le moyen pour générer des sons simulant le bruit aérodynamique du véhicule comprend au moins un transducteur électrodynamique disposé dans le rétroviseur droit, un transducteur électrodynamique disposé dans le rétroviseur gauche, tous deux orientés vers le conducteur, et un transducteur électrodynamique disposé au pied du pare-brise en position centrale.

Dans un mode de réalisation de l'invention, le moyen pour générer des sons simulant le bruit de roulement du véhicule comprend des transducteurs électrodynamiques, chacun disposé à proximité d'une roue du véhicule et orienté en direction de l'habitacle, et des transducteurs électrodynamiques fixés sous le plancher du véhicule pour les transmettre dans l'habitacle.

Le bruit moteur perçu dans l'habitacle est très important pour le conducteur, puisqu'il est pour lui une source de renseignements. Le conducteur adopte une conduite basée sur le bruit émis par le moteur de son véhicule. De plus, ce bruit est une source de renseignements sur le bon fonctionnement de l'ensemble des organes du groupe motopropulseur.

Le bruit aérodynamique est généré par l'écoulement de l'air au contact de la carrosserie lorsque le véhicule est en condition réelle de roulage. C'est un bruit dont le niveau évolue avec la vitesse du véhicule. Dans le cadre d'un simulateur de conduite, il est important de bien restituer ce bruit qui est élément d'information sur la vitesse du véhicule.

Le bruit de roulement est généré par le contact pneu-chaussée. Le niveau du bruit perçu dans l'habitacle est lié à la chaussée. Plus le revêtement présente une forte granulométrie et plus le niveau de bruit dans l'habitacle est important. De la même manière, plus le véhicule roule vite, et plus le niveau du bruit de roulement est important. Si le véhicule roule sur le bas-côté droit, le champ sonore dans l'habitacle se dissymétrise et devient plus fort du côté droit. Ce changement de champ sonore avertit le conducteur que son véhicule quitte sa trajectoire. Le conducteur agit en conséquence pour rétablir la situation. D'une manière générale, les évolutions de bruit indiquent au conducteur tout changement au niveau de la chaussée ou du revêtement.

Pour des raisons évoquées ci-avant, l'invention propose d'améliorer l'environnement sonore en adoptant un ensemble électroacoustique composé de transconducteurs acoustiques et vibratoires.

D'autres avantages et caractéristiques de l'invention apparaîtront à l'examen de la description détaillée d'un mode de réalisation nullement limitatif, et des dessins annexés :

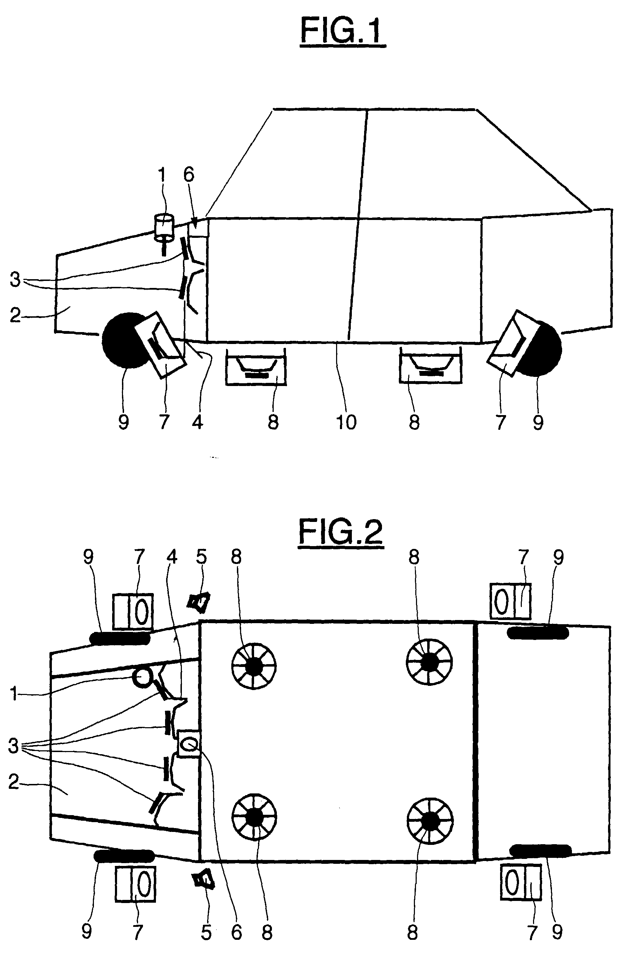

les figures 1 et 2 représentent schématiquement l'implantation de transducteurs dans un véhicule selon l'invention.

Le moteur en fonctionnement est source de vibrations et de bruit. Les signaux vibratoires passent par les éléments rigides et concernent le domaine des basses et moyennes fréquences, environ 10-3000Hz. Ils sont véhiculés du moteur aux oreilles des passagers par les fixations du moteur. Ils excitent alors la structure dans sa globalité. Les signaux acoustiques sont transmis de manière aérienne grâce au phénomène de transparence des parois situées entre le moteur et l'habitacle. Pour ce second type de transmission, la bande spectrale est de l'ordre de 50Hz à 12000Hz.

On reproduit le mode réel de génération du bruit grâce à la séparation en deux zones fréquentielles spécifiques.

La première zone, entre 10Hz et 3000Hz, va être générée par l'intermédiaire d'un excitateur électrodynamique, de type pot vibrant 1, voir figure 1, placé dans le compartiment moteur 2 et connecté à la structure en lieu et place de l'attache moteur pour une architecture d'implantation du groupe motopropulseur transversale. La connexion de l'excitateur sera différente pour une architecture longitudinale, auquel cas, on adoptera une connexion au longeron du véhicule. Grâce à cette connexion, les multiples éléments rigides, par exemple les longerons vont transmettre les vibrations à la cabine qui agit comme transducteur rayonnant.

La seconde zone fréquentielle s'étend de 50Hz à 12000Hz. Des transducteurs 3 de type électrodynamique (haut-parleur) sont positionnés dans le compartiment moteur de façon à rayonner vers le tablier du véhicule un champ sonore représentatif de celui créé par le moteur, le tablier étant la partie du véhicule qui sépare le compartiment moteur et l'habitacle. Une pondération en niveau est appliquée sur les haut-parleurs afin de recréer un champ acoustique réaliste au niveau de la paroi du tablier. Ce groupe de haut-parleurs constitue une enceinte acoustique qui sera posée sur le sol par l'intermédiaire d'un pied 4.

Pour le système de haut-parleurs 3, il faut recourir à un système de type enceinte acoustique à double haut-parleur, un pour les basses-fréquences avec un diamètre de 20cm au minimum et un pour les hautes-fréquences, de manière à restituer fidèlement la gamme de fréquences 50-12000Hz. La tenue en puissance de ce système électro-acoustique sera de 120W avec un rendement acoustique de 95dB pour 1W à 1 mètre. L'objectif est de fournir dans l'habitacle un signal de pression de 95dB. Suivant la nature de la cabine de simulation utilisée, 6 ou 8 systèmes de ce type (enceinte double haut-parleurs) seront implantés dans le compartiment moteur. Chaque haut-parleur 3 est pourvu d'un amplificateur et d'un égaliseur.

On reproduit aussi l'environnement sonore représentatif du bruit aérodynamique. Pour ce faire, des sources de bruit, dédiées à la génération du bruit aérodynamique, sont intégrées très près du pare-brise.

On intègre un transducteur acoustique 5 dans le rétroviseur extérieur gauche et le rétroviseur extérieur droit. De cette manière, la source de bruit se trouve placée à quelques centimètres de la vitre de la portière et du pare-brise. Cette orientation sera telle que le lobe principal de directivité du haut-parleur sera dirigé vers le conducteur pour le rétroviseur gauche et vers le passage pour le rétroviseur droit.

On intègre un transconducteur acoustique 6 au pied du pare-brise en position centrale. Cette disposition permet d'améliorer le champ sonore aéroacoustique dans l'habitacle. Pour ne pas perturber le champ visuel des passagers, l'intégration s'effectuera en encastrant le transducteur. Une inclinaison de l'ordre de 15° vers l'arrière sera appliquée au transducteur afin d'orienter légèrement son émission vers le pare-brise.

Les transducteurs, ainsi installés dans le véhicule, reçoivent les signaux représentatifs du bruit aérodynamique. Le transducteur 5 implanté dans le rétroviseur droit, reçoit un signal appelé "signal de bruit aérodynamique droit" ; le transconducteur 5 implanté dans le rétroviseur gauche, reçoit un signal appelé "signal de bruit aérodynamique gauche". Quant au transducteur central 6, il reçoit la sommation des deux signaux de bruit aérodynamique droit et gauche. Ces trois signaux sont ajustables en fréquence grâce aux égaliseurs et en niveau grâce aux amplificateurs dédiés à chaque transducteur.

Les transducteurs 5 sont du type électrodynamique. Ceux-ci sont implantés dans les rétroviseurs et sont soumis à la fois à des contraintes géométriques, de tenue en puissance et de bande passante. Pour une intégration discrète des transducteurs, il faut que leur diamètre soit légèrement inférieur à la hauteur du miroir par exemple égal à 80mm. La puissance électrique du haut-parleur sera de l'ordre de 50W et son rendement acoustique de 90dB pour 1 Watt à 1 mètre. L'objectif est de générer dans l'habitacle un niveau de pression global de l'ordre de 80 dB à l'oreille gauche du- conducteur (et respectivement 80dB à l'oreille droite du passager avant). La bande de fréquences restituée sera 100Hz-4000Hz au minimum.

Le transducteur central 6 sera aussi de type électrodynamique avec un diamètre de 120mm à 160mm. La puissance électrique admissible sera de 80W avec un rendement acoustique de 90dB pour 1 Watt à 1 mètre. L'objectif est de générer dans l'habitacle un niveau de pression global de l'ordre de 80 dB en un point situé au milieu de l'habitacle. La bande de fréquences restituée sera 80Hz-4000Hz.

Pour le bruit de roulement et des pneumatiques 9, on différencie le bruit émis par le pneu qui transite de manière aérienne aux oreilles du conducteur, du bruit généré par les vibrations résultant du contact avec la chaussée qui transite par les structures solides dans l'habitacle. Le premier type de bruit est ainsi appelé "part aérienne du bruit de roulement"" ; le second bruit est appelé "part de structure du bruit de roulement". Nous avons alors en parallèle deux restitutions sonores.

Pour restituer la part aérienne, quatre haut-parleurs 7 sont disposés près des roues et dirigés vers l'habitacle. Une inclinaison des haut-parleurs 7 de l'ordre de 30° permet d'optimiser l'émission sonore vers les occupants du véhicule. L'utilisation de quatre sources sonores est importante car elle permet :
1) de recréer un champ sonore homogène autour du véhicule ;
2) de dissymétriser le champ sonore entre l'avant et l'arrière lorsque des variations de revêtement apparaissent se traduisant par une phase de transition avant/arrière ;
3) de dissymétriser le champ sonore entre la droite et la gauche. Ceci est important lorsque le véhicule se décale sur la chaussée car les vibrations des pneus roulant par exemple sur le bas-côté vont fortement varier.
4) d'utiliser les quatres sources indépendantes afin de recréer un champ sonore particulier lorsque le véhicule est dans des conditions de roulage extrême en virage (glissement latéral) ou en ligne droite (glissement longitudinal). Dans ces situations, le pneumatique est très fortement sollicité ce qui se traduit par l'apparition d'un phénomène dénommé crissement de pneumatique.

On utilise des systèmes électroacoustiques de type enceinte acoustique à double haut-parleur, un pour les basses-fréquences avec un diamètre de 20cm au minimum et un pour les hautes-fréquences, de manière à restituer fidèlement la gamme de fréquences 60Hz-15000Hz. la tenue en puissance des haut-parleurs sera de 100W avec un rendement acoustique de l'ordre de 95dB. L'objectif est de restituer un niveau de pression de 95dB dans l'habitacle. Chaque transducteur est pourvu d'un amplificateur et d'un égailiseur.

Pour restituer la pan de structure, on met en oeuvre des haut-parleurs 8 de technologie électrodynamique disposés sous le véhicule et dirigés vers le plancher 10.

L'utilisation des quatre sources sonores permet :
- de recréer un champ sonore homogène sous le véhicule lorsque les vibrations issues de chaque contact pneu-chaussée sont équivalentes.
- de dissymétriser le champ sonore sous la forme avant/arrière lorsque des variations de granulométrie du revêtement apparaissent puisque, dans ces conditions, le train avant transmet vers l'habitacle, quelques instants avant le train arrière, l'information concernant le changement de revêtement.
- de dissymétriser le champ sonore sous la forme droite/gauche lorsque le véhicule se décale sur la chaussée puisque dans ce cas de figure, les vibrations produites par le contact pneu/bas-côté évoluent considérablement et par suite le champ sonore dans l'habitacle.

On utilise des systèmes électroacoustiques de type enceinte acoustique à double haut-parleur, un pour les basses-fréquences avec un diamètre de 25cm au minimum et un pour les haute-fréquences, de manière à restituer fidèlement la gamme de fréquences 50-10000Hz. La tenue en puissance des haut-parleurs sera de 100W avec un rendement acoustique de l'ordre de 95dB. l'objectif est de restituer un niveau de pression de 95dB dans l'habitacle.

## Revendications

1. Procédé pour simuler la conduite d'un véhicule, dans lequel on génère des sons simulant le bruit du moteur du véhicule, on génère des sons simulant le bruit aérodynamique du véhicule du à l'écoulement de l'air le long de la carrosserie, et on génère des sons simulant le bruit de roulement du véhicule du au contact entre les pneumatiques et la chaussée, pour recréer l'environnement sonore du véhicule à l'intérieur et autour de celui-ci.

2. Procédé selon la revendication 1, dans lequel on génère des sons de fréquence comprise ente 10 et 3000 Hz dans le compartiment moteur pour les transmettre à la structure du véhicule, et des sons de fréquence comprise ente 50 et 12000 Hz dans le compartiment moteur pour les rayonner en direction de l'habitacle du véhicule.

3. Procédé selon la revendication 1 ou 2, dans lequel on génère des sons de fréquence comprise ente 80 et 4000 Hz à proximité du pare-brise du véhicule au moins en trois positions latérale gauche, latérale droite et centrale.

4. Procédé selon l'une quelconque des revendications précédentes, dans lequel on génère des sons de fréquence comprise ente 60 et 15000 Hz à proximité de chaque roue du véhicule en direction de l'habitacle, et des sons de fréquence comprise entre 50 et 10000 Hz sous le véhicule pour les transmettre dans l'habitacle par l'intermédiaire du plancher du véhicule.

5. Dispositif de simulation de la conduite d'un véhicule, caractérisé par le fait qu'il comprend un moyen pour générer des sons simulant le bruit du moteur du véhicule, un moyen pour générer des sons simulant le bruit aérodynamique du véhicule du à l'écoulement de l'air le long de la carrosserie, et un moyen pour générer des sons simulant le bruit de roulement du véhicule du au contact ente les pneumatiques et la chaussée, pour recréer l'environnement sonore du véhicule à l'intérieur et autour de celui-ci.

6. Dispositif selon la revendication 5, caractérisé par le fait que le moyen pour générer des sons simulant le bruit du moteur du véhicule comprend un excitateur électrodynamique de fréquence comprise entre 10 et 3000 Hz disposé dans le compartiment moteur et lié à la structure du véhicule, et des transducteurs électrodynamiques (3) de fréquence comprise entre 50 et 12000 Hz disposés dans le compartiment moteur et dirigés vers l'habitacle du véhicule.

7. Dispositif selon la revendication 5 ou 6, caractérisé par le fait que le moyen pour générer des sons simulant le bruit aérodynamique du véhicule comprend au moins un transducteur électrodynamique (5) disposé dans le rétroviseur droit, un transducteur électrodynamique (5) disposé dans le rétroviseur gauche, tous deux orientés vers le conducteur, et un transducteur électrodynamique (6) disposé au pied du pare-brise en position centrale.

8. Dispositif selon l'une quelconque des revendications précédentes, caractérisé par le fait que le moyen pour générer des sons simulant le bruit de roulement du véhicule comprend des transducteurs électrodynamiques (7), chacun disposé à proximité d'une roue du véhicule et orienté en direction de l'habitacle, et des transducteurs électrodynamiques (8) fixés sous le plancher du véhicule pour les transmettre dans l'habitacle.
